Europäisches Patentamt

European Patent Office

Office européen des brevets

(19)

(11) Publication number: **0 106 924**
**B1**

## EUROPEAN PATENT SPECIFICATION

(12)

(45) Date of publication of patent specification: **15.03.89**

(51) Int. Cl.⁴: **H 04 B 3/54**

(21) Application number: **82305684.1**

(22) Date of filing: **26.10.82**

(60) **Divisional application 87201494 filed on 06.08.87.**

(54) **Noise reduction in signal transmission system over building power distribution wiring.**

(43) Date of publication of application:
**02.05.84 Bulletin 84/18**

(45) Publication of the grant of the patent:
**15.03.89 Bulletin 89/11**

(84) Designated Contracting States:
**DE FR GB IT**

(56) References cited:
**CH-A- 410 125
DE-B-1 133 460
DE-B-1 264 592
GB-A-1 153 908
GB-A-2 016 245
US-A-4 041 239**

**PATENTS ABSTRACTS OF JAPAN, vol. 6, no. 95(E-110)(973), 3rd June 1982 & JP A 57 26937 (SHARP K.K.) 13.02.1982**

**ELECTRONIC DESIGN, vol. 29, no. 6, 19th March 1981, pages 233-238, Waseca, MN, Denville, NJ, USA: L. SANDERS: "Manchester II transfers data with integrity, speed"**

(73) Proprietor: **SHARP KABUSHIKI KAISHA
22-22 Nagaike-cho Abeno-ku
Osaka 545 (JP)**

(72) Inventor: **Ise, Masahiko
2187-A18-203 Mise-cho
Kashihara-shi Nara-ken (JP)**
Inventor: **Machino, Katsuyuki
31-101 Higashikidera-cho 1-chome
Nara-shi Nara-ken (JP)**
Inventor: **Tanaka, Hidehiko
2613-1 Ichinomoto-cho
Tenri-shi Nara-ken (JP)**
Inventor: **Okamoto, Takaaki
1028-16 Fujiwara-cho
Nara-shi Nara-ken (JP)**

(74) Representative: **Wright, Peter David John et al
R.G.C. Jenkins & Co. 26 Caxton Street
London SW1H 0RJ (GB)**

Courier Press, Leamington Spa, England.

## Description

This invention relates to a signal transmission system over building or house wiring and more particularly to a noise reduction circuit in a receiver of such a signal transmission system.

It is known in the art of signal transmission that, in a transmission system of the type which utilises building or house wiring for power distribution, digital data can be transmitted using a carrier signal and received via indoor power lines in synchronism with the utility power frequency for building security or other purposes. For such a system, it is necessary to remove any kind of noise from the carrier prior to proper treatment of signals. There are generally two kinds of noise, asynchronous noise (i.e., random noise) and synchronous noise (i.e., thyristor noise).

German patent specification no. 1264592 discloses a system for signal transmission/reception using power lines on which impulse noise may exist. This known system operates by sampling received pulses representing data, and which may include noise pulses, in a time interval of a predetermined duration. The received pulses (data + noise) are counted in a counter which is reset when no pulses are received for a predetermined period, so that during each said time interval the count represents the total number of pulses received. Logic circuitry determines whether or not the number of counted pulses has reached a predetermined count, and on this basis the receiver decides whether the received signals are valid data (count reached) or whether they are just noise (count not reached).

GB patent specification 1153908 discloses a system for signal transmission/reception over power lines, in which pulses representing data and superimposed on the power voltage waveform are counted. If the count reaches a predetermined level the receiver decides that it has received valid data. Each pulse after the first is counted only if it occurs a predetermined time after the previously counted pulse, and the counter is reset in response to any pulse which does not satisfy this requirement.

In both of its aspects, the present invention seeks to provide a noise reduction circuit system for data communication over building power supply wiring, which circuit is both simple and reliable.

In one aspect, the present invention provides a signal transmission system for transmitting signals over building or house wiring, wherein a receiver (11, 12, 13, 14, 21) for receiving signals includes a noise reduction circuit (14) comprising:

means for receiving pulse signals;

means (C) for counting the number (P) of pulses in a train of regularly occurring pulses during a sampling interval; and

means for treating the pulses as data signals only if the number (P) is equal to or exceeds a predetermined reference count (THL)

characterised in that

the system is used for transmitting two-bit binary data codes (10,01) each representing a binary logic bit (1,0) the bits of each code occupying corresponding phase periods (1,3; 2,4) of respective cycles or half cycles of the utility power voltage for signal transmission.

In another aspect the present invention provides a signal transmission system for transmitting signals over building or house wiring, wherein a receiver (11, 12, 13, 14, 21) for receiving signals includes a noise reduction circuit (14) comprising:

means for receiving pulse signals;

means (C) for determining the period of a train of regularly occurring pulses during a sampling interval; and

means for treating the pulses as data signals only if said period is equal to or exceeds a predetermined value;

characterised in that

the system is used for transmitting two-bit binary data codes (10,O1) each representing a binary logic bit (1,0) the bits of each code occupying corresponding phase periods (1,3; 2,4) of respective cycles or half cycles of the utility power voltage for signal transmission.

For a more complete understanding of the present invention and of the advantages thereof, reference is now made to the following description taken in conjunction with the accompanying drawings, in which:

FIG. 1 is a diagram schematically illustrating a signal transmission system utilising house wiring according to an embodiment of the present invention;

FIG. 2 is a schematic view of a one-chip controller in FIG. 1;

FIG. 3(a) is a waveform diagram showing noise passing over a resonance circuit, FIG. 3(b) a waveform diagram of the output of a level detector, and FIG. 3(c) an enlarged diagram of section A in FIG. 3(b);

FIGS. 4(a) and 4(b) are diagrams showing impulsive noise and the output of a low-pass filter, respectively;

FIGS. 5(a), 5(b), 5(c), 5(d) and 5(e) are diagrams showing noise, signals, the sum of the noise and signals, the output of the low-pass filter and outputs resulting from digital counting method, respectively;

FIG. 6 is a flow chart showing an algorithm for noise/signal decision;

FIG. 7 is a block diagram showing an example of a noise canceller in FIG. 1;

FIGS. 8(a) to 8(g) are time charts showing the waveforms of various signals for explaining operation of another embodiment of the present invention; and

FIG. 9 is a flow chart showing another algorithm pursuant to the alternative embodiment.

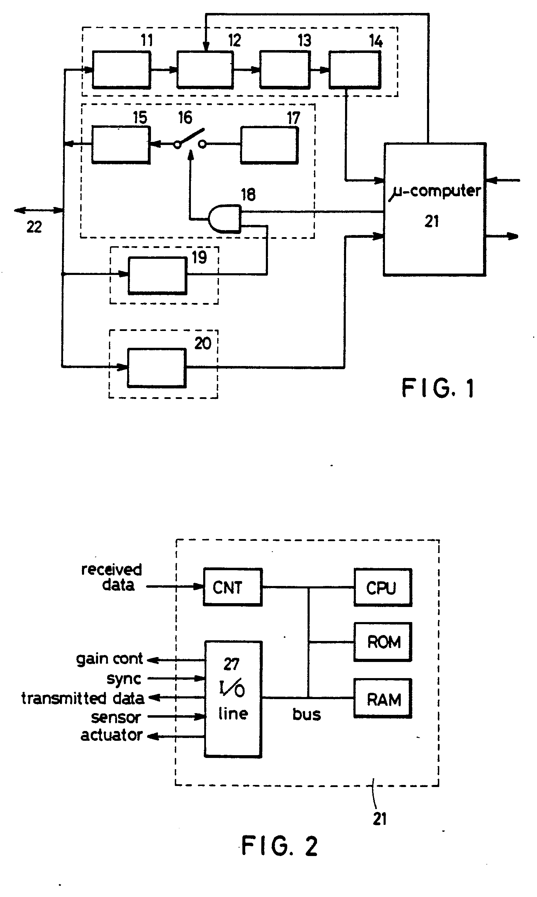

Referring now to FIG. 1, there is illustrated a transmitter/receiver unit in a signal transmission system using house wiring, which unit generally includes a band pass filter 11, an amplifier 12, a level detector 13, a noise canceller 14, a power amplifier 15, a switch 16, a carrier generator 17, a logic gate 18, a fail-safe circuit 19, a sync signal extractor 20 and a controller 21 typically set up of a one-chip microcomputer. With such arrangement, house wiring 22 carries the utility power voltage, typically 60 Hz and 100 volts, and a carrier of typically 40 KHz superimposed on the utility power voltage. The carrier is generated by the carrier generator 17. The band pass filter 11 extracts high frequency components from the house wiring 22 and the amplifier 12 amplifies the high frequency components up to a sufficient level suitable for satisfactory working of the level detector 13. The noise canceller 14 which plays an important role in the present invention, removes random noise from the high frequency components. Received data from the noise canceller 14 is fed to the controller 21 which determines whether an actuator (not shown) is to be enabled, and is also responsive to an input from a sensor (not shown). The fail-safe circuit 19 monitors to see if the controller 21 falls into a run-away state. In the normal state of the system, data is fed via the logic gate 18 to the switch 16 and thence, as carrier to be transmitted, to the power amplifier 15. The sync extractor 20 converts the sine-waveform of the power line voltage waveform into square one.

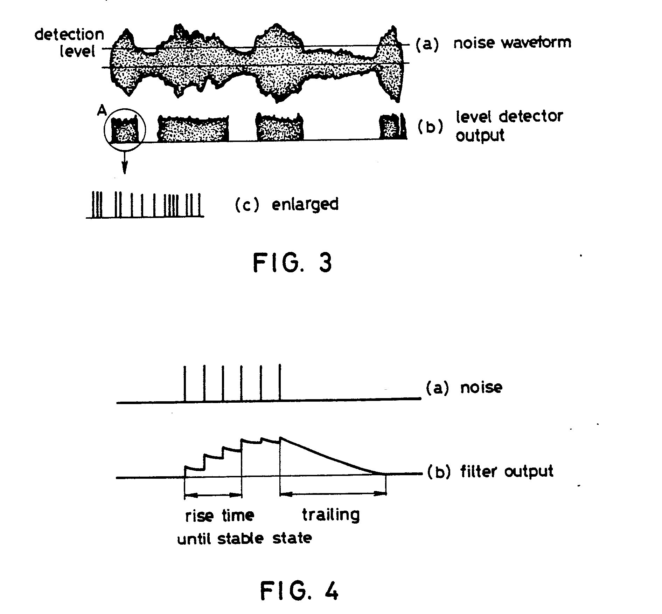

In case where random noise with a level higher than a predetermined level is present after signals are passed through a resonance circuit for signal detection, it is impossible to decide merely from level detection whether the signals are noise, or proper signals. See FIGS. 3(a), 3(b) and 3(c) where FIG. 3(a) indicates the waveform of noise passing through the resonance circuit 11, FIG. 3(b) indicates the output of the level detector 13 and FIG. 3(c) indicates an enlargement of section A in FIG. 3(b). It is noted that the resonance circuit is used for setup of the band pass filter 11. As is clear from FIG. 3(c), it is rare for noise pulses to occur continuously or last for a long time. Since only resonance frequency components are extracted from the original noise through operation of the resonance circuit 11, the resultant waveform bears a form that is AM modulated at random at the resonance frequency. The duration of a signal pulse train can be evaluated from a count of the continuous (i.e. regularly occurring) pulses at the resonance frequency, and the validity of such a pulse train as true data is indicated by such count exceeding a predetermined value.

If the noise reduction procedure with monitoring of signal continuity is carried out using a known analog method (using a low-pass filter or an integrator), selection of its cut-off frequency is rather difficult and response characteristics become worse. For the convenience of illustrating level fluctuations only, the result from intervention of the low-pass filter on the output of the level detector is given in FIG. 4(b), suggesting that, with decreasing of the cut-off frequency (1 / time) constant in case of the integrator), noise components are suppressed but rising time until normal state and trailing time become longer. Therefore, if true signals appear in a region where the rate of noise component is high compared with that of true signal, effective removal of noise is not possible. In such case, the impact of noise can be effectively eliminated by counting the number of pulses in digital fashion and disregarding the pulses in question if the count is less than a predetermined reference value.

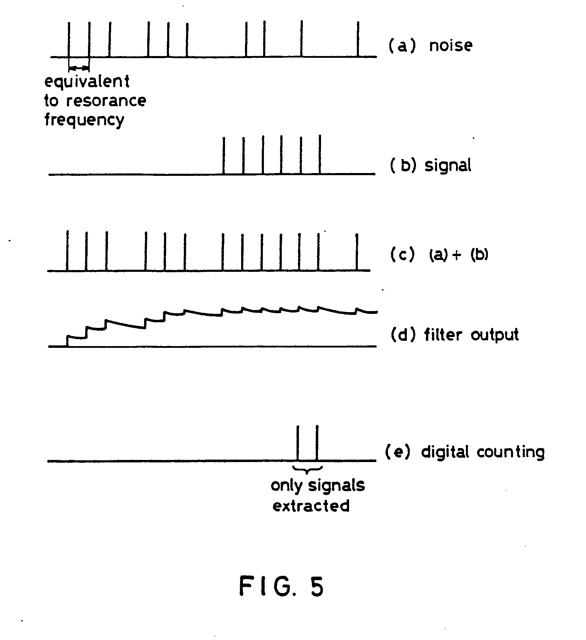

Assuming less than three continuous impulsive noises and six signal pulses are present as indicated in FIGS. 5(a) and 5(b) and 5(c), comparison between FIG. 5(d) showing the effect of the low-pass filter and FIG. 5(e) showing that of digital processing proves the superiority of the latter. We assume that in this case the resonance frequency agrees with the signal frequency. In other words, the pulses after passing over the low-pass filter are given in FIG. 5(d), which face the difficulties in setting a proper detection level and extracting only signal components in an effective manner. The digital counting method as indicated in FIG. 5(e), on the other hand, serves to accept the pulses in question as effective or true signals when more than five pulses appear in continuous fashion, thus ensuring precise extraction of the effective signal components only.

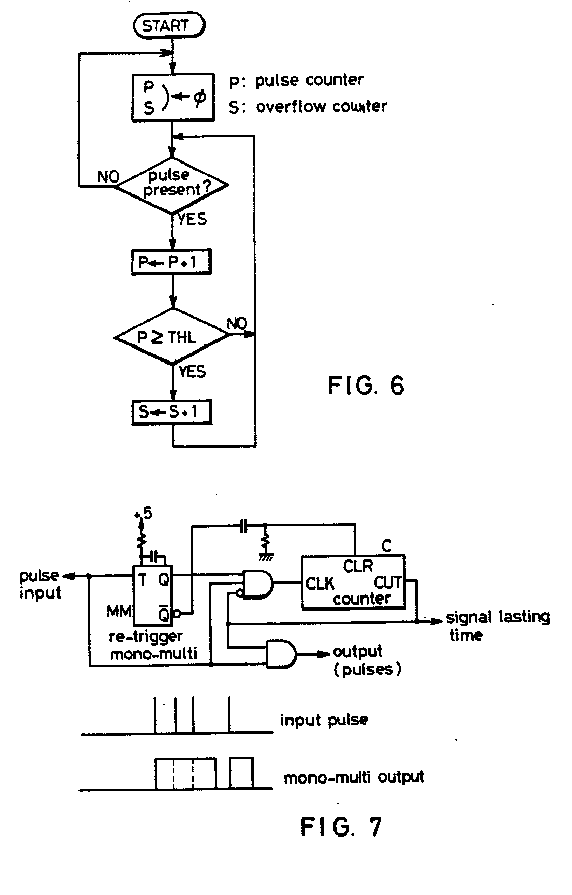

A processing algorithm of the present invention is depicted in a flow chart of FIG. 6 wherein a pulse counter is denoted by P and an overflow counter for counting pulses exceeding a setting is denoted by S. These counters are reset to zero immediately after pulses disappear at any sampling interval. The pulses present at the sampling intervals are subject to addition and whether the sum of the pulses is more than a predetermined threshold setting THL is then decided. Unless the threshold level THL is reached, the system decides if any pulses are present at the interval of sampling. If this step reveals that no pulses are present at the interval of sampling as before, then the counters P and S are reset to zero, bringing the whole system to its initial state. Should any succeeding pulses be present and the sum of counts exceed the threshold setting THL, the counter S is incremented, with its count treated at those indicative of signal components. Thereafter, the system returns to the primary step of deciding if any pulses are present at the interval of sampling and repeats the same procedure as mentioned above.

It is obvious from the foregoing that, if the threshold level or monitor time is selected to be longer than the length of time where impulsive noise usually lasts, the effect of noise removal is further improved.

The algorithm as indicated in FIG. 6 is implemented with a known microcomputer up to the limits of its arithmetic speed. That is, it is impossible to use a microcomputer if the signal frequency is higher than 10KHz. In this case, this process is achieved by a random logic scheme an example of which is given in FIG. 7. The step of sampling to decide if any pulses are present in a given interval is achieved when a retrigger type mono-multi MM of FIG. 7 has a time constant $\tau_M$ longer than the signal interval $T_s$ but shorter than

twice the signal interval (i.e., $T_s<\tau_M<2T_s$). Once the threshold counting has been reached, the counter C does not vary in count until the output of the re-trigger type mono-multi falls. Therefore, the output of this counter implies the signal duration. When measurement of the signal duration is undertaken by the microcomputer, it is more preferable that its internal counter be used to count the carrier pulses and the output of the counter and the input pulses be AND'gated.

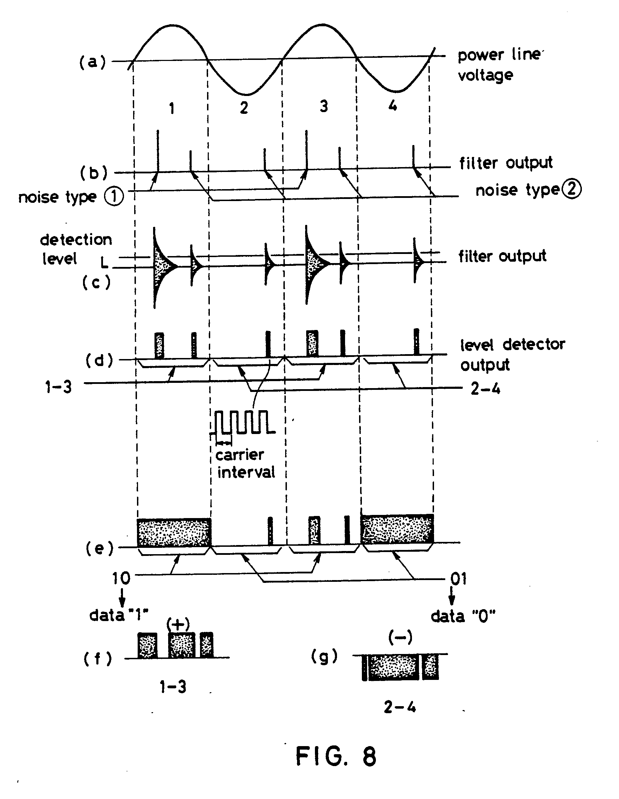

The noise reduction scheme is not effective in reducing the so-called thyristor noise which often occurs in the signal transmission system over building or house wiring in synchronism with the utility power frequency (for instance, 50 or 60 Hz). An additional technique is therefore required to fulfill the demand for perfect reduction of noise. Observation of voltages running through the house wiring and the hi-pass filter indicates that, as indicated in FIG. 8(b), there is included an impulsive noise of a high level (max: about 20 volts) and a short duration of about 5 µs synchronous with the utility power voltage in FIG. 8(a). This synchronous noise is generally classified into two groups (1) noise occurring in the same phase at one cycle of the power frequency and (2) noise occurring twice, with a phase difference of 180°, in one cycle of the power frequency. While the former noise is rare and the latter noise is common. In the event that pulses in question are conveyed through a filter tuned to the carrier frequency, it is possible that impulsive noise may excite the resonance circuit and give rise to damped oscillation at the carrier frequency as viewed in FIG. 8(c). In case of AM transmission, decision as to whether true signals are present or not is based upon if there is any signal whose level exceeds an appropriate detection level. Should the detection level be set at L in FIG. 8(c), the output of the level detector is given in FIG. 8(d). Pursuant to the teachings of the present invention, it is assumed that such synchronous noise is unavoidable and a decision as to whether true signals are received is made in accordance with the length of the time during which signal pulses at the carrier frequency occur continuously during the half or full cycle of the power frequency. Another factor which should be considered in assuring highly reliable transmission of signals is the difficulty in removing the affect of impulsive noise even if the output of the level detector is filtered through the low-pass filter where the density of noise pulses is substantially high.

In the digital substraction method embodying the present invention, noise/signal discrimination may be carried out in any interval of time (for instance 1/N (N=1,2....) of the full or half cycle of the power frequency). To cope with the first type of noise (1) which occurs every full cycle, 2-bit binary data codes "10" or "01" are superimposed on the carriers during the corresponding half cycles in two consecutive full-cycles (for instance, the first and third half cycles or the second and fourth half cycles) for signal transmission. During reception of signals, pulses are regarded as "signal" when the difference between the counts of the carriers during each of the half-cycles is larger than a reference setting and otherwise regarded as "noise". It is already known that data "10" and "01" may represent binary bit "0" or "1". The word "half cycle" is used herein to define an interval beginning with 0° and ending with 180°, whether its phase is positive or negative. The full cycle, on the other hand, implies an interval beginning with 0° and ending with 360°.

The subtraction or down-counting is executed so as to determine a count difference between the number of carrier pulses in the earlier half-cycle and the number in the corresponding later half-cycle, and the resulting count difference is zero when only noise as shown in FIG. 8(d) is present. In practice, the above mentioned situation is very rare, but the situation where the differential count is less than the reference setting is treated in the same manner. However, when signals are transmitted in terms of "01" and "10" and the output of the level detector as in FIG. 8(e) is derived, the subtractions provide results as depicted in FIGS. 8(f) and 8(g) where the data signals are definitely distinguishable from noise. It is understood that FIG. 8(f) schematically shows the subtraction between the first and third half-cycles and FIG. 8(g) that between the second and fourth half-cycles.

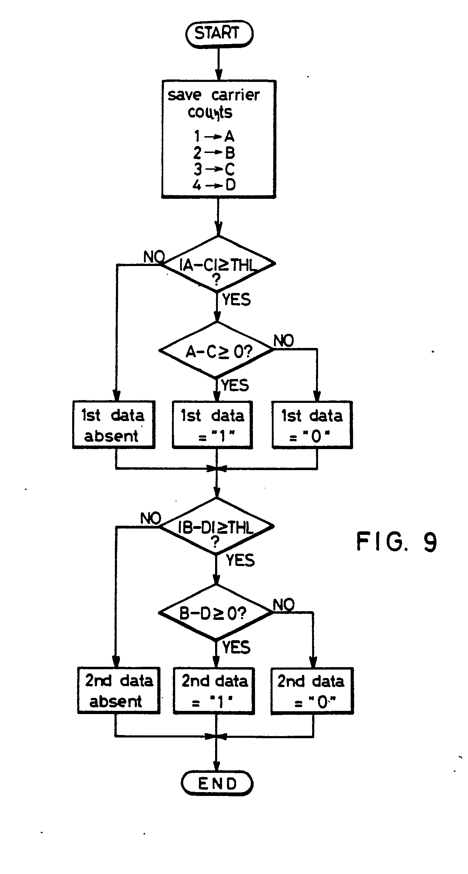

The data/noise discrimination is detailed in a flow chart of FIG. 9. The counts of the carrier pulses during the respective half-cycles within the two consecutive full cycles are saved in memory locations A to D. The carrier count during the first half-cycle is saved in the memory location A, that during the second half-cycle in the memory location B, that during the third half-cycle in the memory location C and during the fourth half-cycle in the memory location D. It is noted that this count operation is carried out using the built-in 8-bit counter of the microcomputer 21 in FIG. 2 which further includes an 8-bit CPU, a 1-K byte ROM, 64-byte RAM and 27 1/0 lines. A step is effected by which to decide if the differential count (1A - C1) between the first and third half-cycles A and C is greater than the threshold setting THL. If the setting is not exceeded, then the pulses in question is treated as "noise". In other words, the pulses in question are first treated as being not "signal" and excluded from an operating sequence of signal decision. As long as the threshold setting is exceeded and the result of the substraction (A - C) is positive, the first data are regarded as "1". If the difference is minus, then the first data are considered as "0". Subsequently, the differential count (B - D) between the second and fourth half-cycles is evaluated and the second bit of data is considered as "1" or "0", based upon whether the sign of the differential count is plus or minus.

Referring to FIG. 8(e), the pulses in question during the first and third half-cycles A and C are characteristic of "10" and regarded as data "1", whereas those during the second and fourth half-cycles B and D are characteristic of "01" and regarded as data "0".

Since synchronous noise occurs mostly in a unit of the half-cycle of the power frequency as described briefly above, all that is necessary is to pay attention to only the first and second half-cycles and evaluate the differential count (A - B). This results in further easeness of the signal/noise decision algorithm. While in the foregoing the signal/noise decision relies upon the difference in the carrier counts, it is also possible to achieve such decision in accordance with the difference between the durations in the respective half-cycles of continuous occurrence of carrier frequency components.

It will be appreciated that in more general terms, the embodiment illustrated with reference to figures 8 and 9 for eliminating synchronous noise operates to transmit a digital value by sending a first number of pulses in a first transmission interval (e.g. half-cycle 1) and a second number of pulses (in this case zero) which differs from the first number of pulses, in a subsequent transmission interval (e.g. half-cycle 3), and to determine the difference between the number of pulses received during such transmission intervals and to treat the pulses as representing data only if the difference exceeds a predetermined value.

Divisional application 87201494.9 (EP-A-258920) relates to the noise reduction aspect of the above described signal transmission system.

**Claims**

1. A signal transmission system for transmitting signals over building or house wiring, wherein a receiver (11, 12, 13, 14, 21) for receiving signals includes a noise reduction circuit (14) comprising:
   means for receiving pulse signals;
   means (C) for counting the number (P) of pulses in a train of regularly occurring pulses during a sampling interval; and
   means for treating the pulses as data signals only if the number (P) is equal to or exceeds a predetermined reference count (THL)
   characterised in that
   the system is used for transmitting two-bit binary data codes (10,01) each representing a binary logic bit (1,0) the bits of each code occupying corresponding phase periods (1,3; 2,4) of respective cycles or half cycles of the utility power voltage for signal transmission.

2. A signal transmission system according to claim 1
   characterised in that
   the pulses received by said receiving means are at a high frequency relative to that of the utility voltage and in that such high frequency received pulses in said corresponding phase periods are counted upwardly in one such period (1; 2) and downwardly in the other such period (3; 4), and in that the resulting count value (A-D; B-D) is used to determine whether said received pulses are noise or whether they represent a said code.

3. A signal transmission system for transmitting signals over building or house wiring, wherein a receiver (11, 12, 13, 14, 21) for receiving signals includes a noise reduction circuit (14) comprising:
   means for receiving pulse signals;
   means (C) for determining the period of a train of regularly occurring pulses during a sampling interval; and
   means for treating the pulses as data signals only if said period is equal to or exceeds a predetermined value;
   characterised in that
   the system is used for transmitting two-bit binary data codes (10,01) each representing a binary logic bit (1,0) the bits of each code occupying corresponding phase periods (1,3; 2,4) of respective cycles or half cycles of the utility power voltage for signal transmission.

4. A signal transmission system according to any of claims 1 to 3 characterised in that said phase periods each correspond to 1/N (where N=1,2,....) of the full or half cycle of the utility power voltage.

5. A signal transmission system, according to any preceding claim characterised in that each said two-bit binary data code (10, O1) is transmitted by sending a first number of pulses in a first phase period (1; 2), and a second number of pulses which differs from said first number of pulses in a subsequent corresponding phase period (3; 4), and in that the noise reduction circuit (14) is operable to determine the difference between the number of pulses (A,C; B,D) received during said phase periods and to treat the pulses as representing data only if the difference (1A-C1; 1B-D1) exceeds a predetermined value.

**Patentansprüche**

1. Einrichtung zur Signalübertragung über das elektrische Versorgungsnetz eines Gebäudes, die einen Signalempfänger (11, 12, 13, 14, 21) mit Rauschunterdrückungsschaltung (14) aufweist mit:
   - einer Empfangsvorrichtung für Impulssignale;
   - einer Vorrichtung (C) zum Zählen der Anzahl (P) der während eines Signal-Abtastintervalls in einer Folge regulär auftretender Impulse; und
   - einer Vorrichtung, die die Impulse nur dann als Datensignale verarbeitet, wenn die Impuls-Anzahl (P) größer oder gleich einer Bezugszahl (THL) ist,
   dadurch gekennzeichnet, daß
   - die Einrichtung zur Übertragung binärer Zwei-Bit-Datencodes (10,01) verwendet wird, die jeweils ein binäres Logik-Bit (1,0) darstellen, und daß
   - die Bits eines jeden Codes einander entsprechende Phasen (1,3; 2,4) jeweiliger Perioden oder Halbperioden der Versorgungsspannung zur Signalübertragung besetzen.

2. Einrichtung zur Signalübertragung nach Anspruch 1, dadurch gekennzeichnet, daß
   - die von der Empfangsvorrichtung aufgenommenen Impulse eine im Verhältnis zur Versorgungsspannung hohe Frequenz aufweisen,

- die aufgenommenen hochfrequenten Impulse in den zugeordneten Phasenperioden innerhalb der einen Periode (1; 2) additiv und innerhalb der anderen Periode (3; 4) subtraktiv gezählt werden, und daß

- das Zählergebnis (A-D; B-D) zur Feststellung verwendet wird, ob die aufgenommenen Impulse Rauschen oder Datencodes sind.

3. Einrichtung zur Signalübertragung über das elektrische Versorgungsnetz eines Gebäudes, die einen Signalempfänger (11, 12, 13, 14, 21) mit Rauschunterdrückungsschaltung (14) aufweist mit:

- einer Empfangsvorrichtung für Impulssignale;

- einer Vorrichtung (C) zur Erfassung der Periode einer Folge regulär auftretender Impulse während eines Signal-Abtastintervalls; und

- einer Vorrichtung, die die Impulse nur dann als Datensignale verarbeitet, wenn die Periode größer oder gleich einer vorgegebenen Größe ist; dadurch gekennzeichnet, daß

- die Einrichtung zur Übertragung binärer Zwei-Bit-Datencodes (10,01) verwendet wird, die jeweils ein binäres Logik-Bit (1,0) darstellen, und daß

- die Bits eines jeden Codes einander entsprechende Phasen (1,3; 2,4) jeweiliger Perioden oder Halbperioden der Versorgungspannung zur Signalübertragung besetzen.

4. Einrichtung zur Signalübertragung nach einem der Ansprüche 1 bis 3, dadurch gekennzeichnet, daß die Phasenperioden jeweils einem Bruchteil 1/N (mit N=1,2,...) der Periode oder Halbperiode der Versorgungsspannung entsprechen.

5. Einrichtung zur Signalübertragung nach einem der vorstehenden Ansprüche, dadurch gekennzeichnet, daß

- jeder Zwei-Bit-Datencode (10,01) übertragen wird durch Absenden einer ersten Impuls-Anzahl innerhalb einer ersten Phasenperiode (1; 2) und einer zweiten zur ersten Impuls-Anzahl unterschiedlichen Impuls-Anzahl innerhalb einer folgenden entsprechenden Phasenperiode (3; 4) und daß

- die Rauschunterdrückungsschaltung (14) die Differenz der Anzahl der während der Phasenperiode empfangenen Impulse (A,C; B,D) feststellt und die Impulse nur dann als Daten bewertet, wenn die Differenz (1A-C1; 1B-D1) einen vorgegebenen Wert übersteigt.

**Revendications**

1. Système de transmission de signaux pour transmettre des signaux sur les lignes secteur d'un bâtiment ou d'une maison, dans lequel un récepteur (11, 12, 13, 14, 21) destiné à recevoir des signaux comporte un circuit de réduction de bruit (14) comprenant:

des moyens pour recevoir des impulsions de signal;

des moyens (C) pour compter le nombre (P) d'impulsions dans un train d'impulsions apparaissant régulièrement pendant un intervalle d'échantillonnage; et

des moyens pour traiter les impulsions comme des signaux de données seulement si le nombre (P) est égal ou supérieur à un comptage de référence prédéterminé (THL) caractérisé en ce que

le système est utilisé pour transmettre des codes de données binaires à deux bits (10,01) représentant chacun un chiffre logique binaire (1,0), les bits de chaque code occupant des périodes de phase correspondantes (1,3; 2,4) de cycles ou demi-cycles respectifs de la tension secteur pour la transmission de signaux.

2. Système de transmission de signaux selon la revendication 1, caractérisé en ce que les impulsions reçues par lesdits moyens de réception sont à une fréquence élevée par rapport à celle de la tension du secteur et en ce que de telles impulsions de fréquence élevée reçues au cours desdites périodes de phase correspondantes font l'objet d'un comptage progressif au cours d'une telle période (1; 2) et d'un comptage régressif au cours de l'autre telle période (3; 4), et en ce que la valeur de comptage résultante (A-C; B-D) est utilisée pour déterminer si lesdites impulsions reçues sont du bruit ou si elles représentent un tel code.

3. Système de transmission de signaux pour transmettre des signaux sur les lignes secteur d'un bâtiment ou d'une maison, dans lequel un récepteur (11, 12, 13, 14, 21) destiné à recevoir des signaux comporte un circuit de réduction de bruit (14) comprenant:

des moyens pour recevoir des impulsions de signal;

des moyens (C) pour déterminer la période d'un train d'impulsions apparaissant régulièrement pendant un intervalle d'échantillonnage; et

des moyens pour traiter les impulsions comme des signaux de données uniquement si ladite période est égale ou supérieure à une valeur prédéterminée; caractérisé en ce que

le système est utilisé pour transmettre des codes de données binaires à deux bits (10,01) représentant chacun un chiffre logique binaire (1,0), les bits de chaque code occupant des périodes de phase correspondantes (1,3; 2,4) de cycles ou demi-cycles respectifs de la tension secteur pour la transmission de signaux.

4. Système de transmission de signaux selon l'une quelconque des revendications 1 à 3, caractérisé en ce que lesdites périodes de phase correspondent chacune à 1/N (où N=1,2...) du cycle complet ou du demi-cycle de la tension du secteur.

5. Système de transmission de signaux selon l'une quelconque des revendications précédentes, caractérisé en ce que chacun desdits codes de données binaires à deux bits (10,01) est transmis par l'envoi d'un premier nombre d'impulsions au cours d'une première période de phase (1; 2), et un second nombre d'impulsions qui diffère du premier dit nombre d'impulsions au cours d'une période de phase correspondante ultérieure (3; 4), et en ce que le circuit de réduction de bruit (14) peut fonctionner de manière à déterminer la différence entre le nombre d'impulsions (A,C; B,D) reçues pendant lesdites périodes de phase et à traiter les impulsions comme représentant des données uniquement si la différence (1A-C1; 1B-D1) dépasse une valeur prédéterminée.

FIG. 1

FIG. 2

1

detection level — (a) noise waveform

A — (b) level detector output

(c) enlarged

**FIG. 3**

(a) noise

(b) filter output

rise time until stable state — trailing

**FIG. 4**

(a) noise

equivalent
to resorance
frequency

(b) signal

(c) (a) + (b)

(d) filter output

(e) digital counting

only signals
extracted

FIG. 5

P: pulse counter

S: overflow counter

FIG. 6

input pulse

mono-multi output

FIG. 7

EP 0 106 924 B1

FIG. 8

5

FIG. 9